# EUROPEAN PATENT APPLICATION

(11) **EP 2 937 165 A1**
(43) Date of publication of application: **28.10.2015**
(21) Application number: 14166016.7
(22) Date of filing: 25.04.2014
(51) Int. Cl.: B23D 57/00, B28D 5/04, B23D 59/00, B28D 5/00

(54) **Motor unit for a wire saw device and wire saw device employing the same**

(71) Applicant: Applied Materials Switzerland Sàrl, 1033 Cheseaux-sur-Lausanne (CH)
(72) Inventor: Mittaz, Alexandre, 1076 Ferlens (CH); Schmid, Andreas, 3280 Meyriez (CH); Blum, Claude Oliver, 1400 Yverdon (CH)
(74) Representative: Zimmermann & Partner Patentanwälte mbB

(57) **Abstract**

A motor unit (10) for a wire saw device comprises a housing (15), a shaft (20) being rotatably provided in the housing (15), a motor (25) having a stator (26) and a rotor (27), wherein the stator is fixed to the housing (15), and wherein the rotor (27) is mounted to the shaft (20) and has the same rotational axis (A) as the shaft, and wherein the shaft and the motor (25) are located in the housing (15). Further, a use of such a motor unit and a wire saw device (100) including such a motor unit (10) is proposed.

## Description

### FIELD OF THE PRESENT DISCLOSURE

Embodiments of the present disclosure relate to a motor unit for a wire saw, and to a wire saw device employing the same. The present disclosure particularly relates to a motor unit and a wire saw device employing the same for photovoltaic and/or semiconductor applications, or other electronics applications, such as sapphire crystals for display production.

### BACKGROUND OF THE PRESENT DISCLOSURE

Wire saw devices are used in the photovoltaic and/or semiconductor industry, wherein for both applications semiconductors or semiconductor material is cut with a wire saw device. For example, wire saws cut semiconductor workpieces into shapes amenable for further processing, for example cutting silicon ingots into wafers, bricks, or squares.

For numerous applications, wafers or slices are of a very small thickness relative to the cross-section or diameter of the ingot. The wafers thus have a substantial flexibility and can flex and curve to come into contact with adjacent slices. This flexing is undesirable for precision and flatness of cutting and can give rise to undulations, striations and undesirable irregularities on the surface of the sawed slices. These irregularities, even of several micrometers, are enough to render the slices unusable for certain applications, such as for many solar and semiconductor applications. The deformations of the slices can even lead to micro ruptures and ruptures, especially near the coupling point where the slices are connected to their support.

A problem in the art of wafering semiconductor ingots is how to maintain uniform thin slices without irregularities. This problem translates into providing for the stability of both position and movement of the cutting element, i.e. the wire, and/or the wire guiding elements. In particular, uniformity and stability over time of the movement of the wire is influenced by the motor which drives the wire and the bearings in the mechanical chain from the motor to the wire cylinder, influencing the stability and precision of the position and movement of the wire as a cutting element.

The mechanical components of wire saw devices are subject to high forces and torque caused by the great number of windings of wire in a web, each contributing with a certain amount of force to a load on the motor, bearings and other components. At the same time, the mechanical loads tend to cause friction and produce heat, for example, in rolling bearings, which together with the relatively high rotational speed of the driving system may lead to fatigue of machine parts and eventual failure. Fatigue and mechanical stress can also weaken metallic parts and their surfaces and can thus lead to a loss of precision in the production process.

In view of the above, there is a need for wire saw devices and their components with enhanced durability and long term stability, ensuring long-term operation with high precision and reliability, while at the same time having a low total cost of ownership.

### SUMMARY

An embodiment provides a motor unit for a wire saw device, which includes a housing, a shaft rotatably provided in the housing, a motor having a stator and a rotor, the stator being fixed to the housing, wherein the rotor is mounted to the shaft and has the same rotational axis as the shaft, and wherein the shaft and the motor are located in the housing.

A further embodiment provides a wire saw device, which includes a motor unit, which comprises a housing, a shaft rotatably provided in the housing, a motor having a stator and a rotor, the stator being fixed to the housing, wherein the rotor is mounted to the shaft and has the same rotational axis as the shaft, and wherein the shaft and the motor are located in the housing.

In a yet further embodiment, a use of a motor unit in a wire saw device is provided, wherein the motor unit includes a housing, a shaft rotatably provided in the housing, a motor having a stator and a rotor, the stator being fixed to the housing, wherein the rotor is mounted to the shaft and has the same rotational axis as the shaft, and wherein the shaft and the motor are located in the housing.

Further advantages, features, aspects and details are apparent from the dependent claims, the description and the drawings.

Embodiments are also directed at apparatuses for carrying out the disclosed methods and include apparatus parts for performing each described method step. These method steps may be performed by way of hardware components, a computer programmed by appropriate software, by any combination of the two or in any other manner. Furthermore, embodiments according to the invention are also directed at methods by which the described apparatus operates. It includes method steps for carrying out every function of the apparatus.

### BRIEF DESCRIPTION OF THE DRAWINGS

So that the manner in which the above recited features of the present disclosure can be understood in detail, a more particular description, briefly summarized above, may be had by reference to embodiments. The accompanying drawings relate to embodiments as described in the following:
Fig. 1 shows a motor unit, according to embodiments described herein;
Fig. 2 shows a motor unit, according to further embodiments described herein;
Fig. 3 shows a motor unit, according to further embodiments described herein;
Fig. 4 shows a perspective side view of a wire saw device, according to embodiments described herein;
Fig. 5 shows a top view of a wire saw device, according to embodiments described herein.

### DETAILED DESCRIPTION

Reference will now be made in detail to the various embodiments, one or more examples of which are illustrated in the figures. Each example is provided by way of explanation and is not meant as a limitation. Further, features illustrated or described as part of one embodiment can be used on or in conjunction with other embodiments to yield yet a further embodiment. It is intended that the description includes such modifications and variations.

Herein, "wire saw", "wire saw device", "wire sawing device", and "wire cutting device" are used interchangeably. Herein, the terms "sawing" and "cutting" are used interchangeably; and "wafer-cutting wire saw" and "waferer" are used interchangeably. Herein, an "ingot" may comprise one or more separate semiconductor pieces, for example, a plurality of semiconductor pieces. Herein "ingot" is used broadly to signify at least one larger piece, or un-cut element, that is to be sawed in the wafer sawing. "Ingot" is used interchangeably with "block". Herein, "semiconductor" refers to semiconductor materials such as those used, e.g., in the photovoltaics industry. Further, an ingot may also comprise other types of materials, particularly crystals, such as, e.g., sapphire crystals used in display production, or similar materials.

Herein, "wire guide cylinder", "wire guide", "guide cylinder", and "cylindrical wire guide" are used interchangeably. Wire guides, which are generally cylindrical and rotate about the cylinder axis, are sometimes referred to as rollers, cylinders, and wire guide cylinders.

Herein, a wire saw can be used to form different types of substrates, or wafers, such as solar cell substrates, semiconductor substrates, sapphire, or other useful substrates from a larger piece, such as an ingot, boule, or block.

Herein, "housing" is used to mean an enclosure or case, which encloses or surrounds something. Often, machine parts or motors are enclosed in a housing. The housing may, e.g., serve to protect the item inside from influences of the surroundings, serve as a mechanical interface to an external frame or rack, and/or may provide supply lines like power lines, fluid conducts, or the like.

Herein, "bearing" is used to mean a machine, component, or structural part that supports another part. Alternatively or additionally, a "bearing" is a support, guide, or locating piece for a rotating (or reciprocating) mechanical part. In yet another aspect, a "bearing" is a machine element that allows one part to bear (support) another. Herein, "bearing" and "connector" may be used synonymously.

Herein, a rolling-element bearing, also called a "rolling bearing", is used for a bearing which carries a load by placing rolling elements (such as balls or rollers) between two bearing rings, or between one outer ring and the movable item supported by the rolling bearing. The relative motion of the pieces causes the round elements to roll with very little rolling resistance. If balls are employed as rolling elements, the term "ball bearing" is used. If cylindrical, rounded cylindrical (spherical), or tapered rolling elements are employed, the term "roller bearing" is used as a general term describing rolling bearings not using balls but other suitable rolling elements of different shapes.

Herein, "motor unit" is used for an assembly comprising an electrical motor, a rotatable shaft connected to and driven by the electrical motor, and bearings which support the rotatable shaft and allow a turning movement of the shaft. The former items are enclosed by a housing.

Herein, "rotor" is used to describe the moving part of a rotary electric motor, which rotates because the wires and magnetic field of the motor are arranged so that a torque is developed about the rotor's axis.

Herein, "stator" is used to describe the stationary part of a rotary electric motor, which works together with the rotor.

Herein "outer" and "inner" may be used to convey axial directions, and in this context, "inner" refers to a direction toward the center of a component and "outer" refers to away from the center of the component.

Herein, "runout" or "run-out" is used to describe an inaccuracy of a rotating mechanical system, specifically that a shaft, axle, etc. does not rotate exactly in line with a main rotational axis. In the context of rolling bearings, run-out will cause vibration as well as increased loads on the bearings themselves, and may lead to an enhanced fatigue and chance for technical failure.

In an exemplary context, "inner" and "outer" are used when referring to different connectors, such as complementary "inner" and "outer" connectors (e.g. wire guide side and shaft side connectors), which are inner and outer with respect to the center of the wire guide.

In another context used herein, "inner" and "outer" can be used to convey radial directions, particularly directions perpendicular to the axial direction of the cylindrical wire guide axis. In an exemplary context, "inner" and "outer" surface are used when referring to different surfaces of a connector, such as an inner conical surface (or conical surface between the axis and outer surface) of a connector and an outer surface (for example a surface located between an inner conical surface and a radially outer edge) of a connector.

Generally, embodiments described herein relate to wire saw devices for cutting hard materials. Therein, a wire is pressed against the hard material to be cut, and the wire is moved at high speed along its axial direction, i.e., in the direction of its longitudinal axis. A number of parallel wire portions are used in the form of a wire web for carrying out multiple cuts at the same time, for example for cutting a silicon ingot into a plurality of thin slices (e.g., wafers for the semiconductor industry) simultaneously. The sawing process is a combination of the pressure of the wire or wire web against the object to be sawed and the fast movement of the wire, which leads to an abrasion of material and thus to a cutting respectively sawing of the material. Generally, the area of contact between the wire and the sawed object is provided with a fluid during the process. This fluid may serve different purposes, of which one is the cooling of the wire and the sawed object, and another may be to provide an abrasive, powdered material as part of a slurry, which supports the sawing process. This fluid is applied via nozzles to the wire adjacent to or at the sawing area, i.e., the contact area between a wire and the material to be sawed. It is reused after application to the sawing area, which means it is provided in a closed fluid circuit. The terms "fluid circuit" and "coolant circuit" are used interchangeably in the following.

In the following description, a control unit may be understood as a device electronically controlling substantially all functions of a wire saw device, e.g., a cropper, a squarer, or a wafer cutting wire saw. The control unit is connected to sensors in order to monitor parameters of the machine operation and the sawing process. It is also connected to actuators and devices to steer the electric motors which move the wire. It also includes devices for interaction with an individual in order to receive commands and to report the status of the sawing process. A control unit may also be connected in some embodiments to a computer network to be controlled directly or remotely by an individual or an automated system such as a computer.

According to embodiments described herein, the methods for operating a wire saw device can be conducted by means of computer programs, software, computer software products and the interrelated controllers, which can have a CPU, a memory, a user interface, and input and output means being in communication with the corresponding components of the wire saw device. These components can be one or more of the following components: motors, wire break detection units, wire tracking devices, and the like, which will be described in more detail below.

Furthermore, in the following description, a wire management unit will be understood as a device handling the supply of wire to a cutting area or working area of a wire saw device, such as a cropper, a squarer, or a wafer cutting wire saw. The wire saw includes at least one wire guide for transporting and guiding the wire in a wire moving direction while the wire management unit provides control of the wire tension. Furthermore, the wire provided by the wire management unit forms a wire web in the cutting area. Often, a wire web will be considered as the web formed by a single wire management unit. It should be understood that a wire web may contain more than one working area which is defined as an area in which a sawing process is performed. Thus, according to some embodiments described herein, a wire web can have multiple areas that are formed by a wire from different wire management units.

For modern wire saw devices like croppers, squarers, or wire saws, there is an aim to cut the hard material such as semiconductor material, for example, silicon, quartz, or the like, at high speed. The wire speed, that is the speed of the wire moving through the wire saw device, the wire management unit and the material to be sawed, respectively, can be, for example, 10 m/s or higher. The wire speed can in particular be in a range of 15 to 25 m/s. However, higher wire speeds of up to 30 m/s can also be desirable and could be realized under certain conditions.

For unwinding the wire at the desired wire speed, the spool rotates with a rotation speed of up to several thousand rotations per minute. For example, 1000 to 3000 rpm can be provided for unwinding the wire.

Embodiments generally relate to a motor unit which includes a motor, a shaft and a housing in which both of the former are provided. The motor may be a torque motor. The stator of the motor is mechanically mounted to the housing of the motor unit. Due to a direct mechanical coupling between the motor rotor and the shaft, without an elastic coupling or a belt drive, the stiffness of the system is enhanced. The housing may comprise roller bearings, which are in embodiments provided without an inner ring and an axial thrust bearing. Using a roller bearing without inner rings allows for better accuracy and control of the runout of the shaft. In embodiments, a shaft encoder may be mounted on the shaft with high runout accuracy. In embodiments, the shaft is cooled internally, allowing for better control of the motor unit shaft temperature, despite the additional thermal energy transmitted by the motor rotor to the shaft to which it is mounted. The cooling also allows to minimize the effect of thermal expansion of the shaft and/or housing, resulting in better cutting accuracy. The housing is also cooled internally in embodiments, hence there is no need for a dedicated cooling system for bearing boxes in a wire saw machine frame. In embodiments, a swivel and/or conical interface may be employed between the motor unit shaft and a wire guide cylinder of the wire saw device.

In embodiments, one or more air gap seals are used in order to improve the life time of the motor unit, as they avoid friction to seal the shaft against the housing, for example. In embodiments, a special coating on the air gap seal interface may be used in order to avoid metal to metal contact between the shaft and the flange.

In embodiments, separate or integrated temperature and vibration sensors may be used, allowing monitoring of the motor unit temperature at any time, particularly of the rolling bearings, and also of the motor itself. The information collected may be included in a close-loop system to allow the cutting process to be adapted automatically by a control unit at any time without action from a human operator. In embodiments, an integrated greasing (or lubrication) system is employed to feed the bearing(s) with fresh grease at intervals.

Embodiments described herein provide the following advantages. The cutting process as a whole is improved by using a more efficient design of the driving system. The benefits are, for example, an improvement of the cutting process through better motion control, provided by the direct, rigid mechanical coupling between motor/rotor and wire cylinder via the shaft. At the same time, the impact of temperature variations on the cutting process is minimized by improving the temperature control in the motor unit, which includes temperature control of bearing(s), and motor, and/or shaft. The overall number of distinct parts in the system, i.e., the wire saw device, is reduced and the system simplified. Improved temperature and motion control, together with reduced runout, improve the efficiency and precision of the cutting process, as well as the lifetime expectancy of the system as a whole. As the driving system, including motor and bearing, is integrated in embodiments and delivers thermal and vibrational information all from one device having a plurality of sensors, the control system of the wire saw device may be fed with the data. The management and control of the system via real-time data may thus be optimized in order to dynamically control the cutting process. The greasing system serves for a long term stable operation of the rolling bearings and the motor unit without maintenance, and without having to open the motor unit.

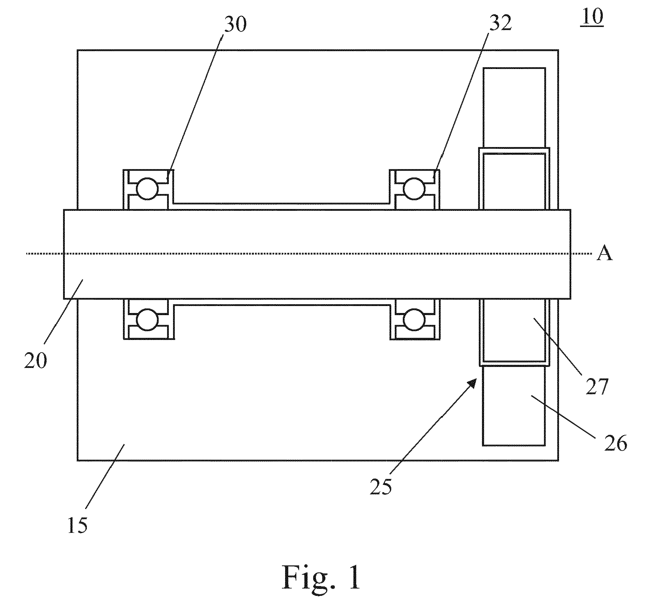

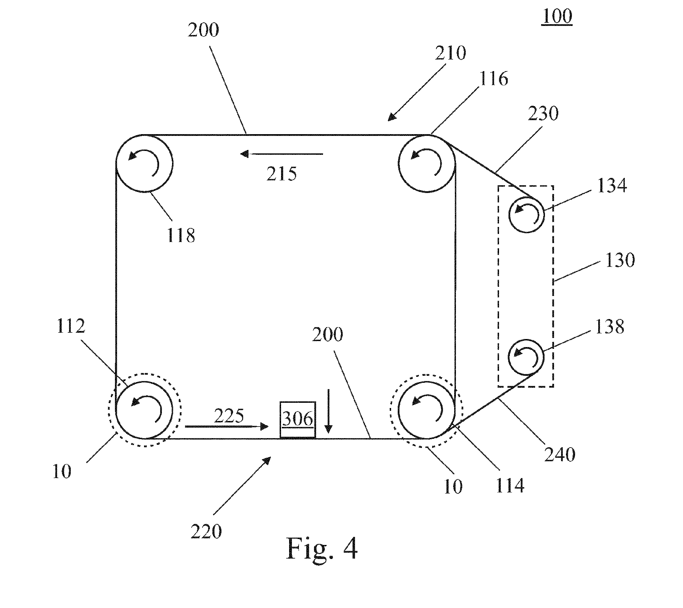

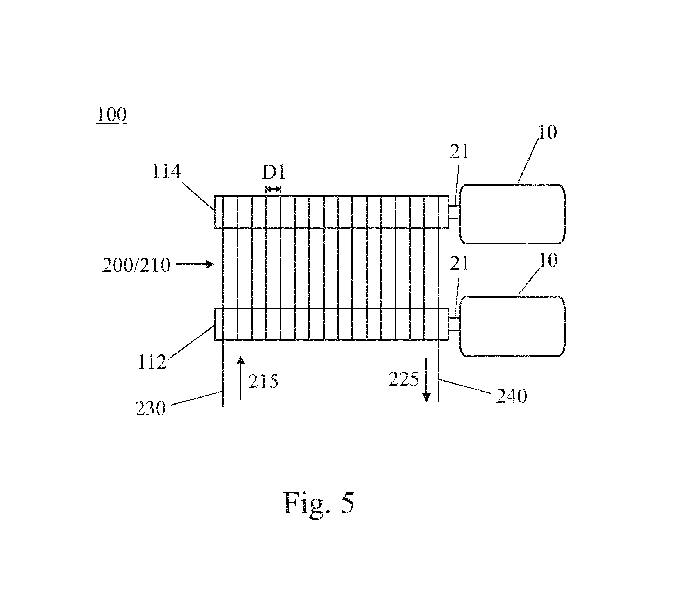

Fig. 1 shows a motor unit 10 according to embodiments, which is used in embodiments employed in a wire saw device 100 (see Fig. 4 and Fig. 5). The motor unit 10 comprises a housing 15, in which a shaft 20 is rotatably provided. An electrical motor 25 is also provided in the housing, which includes a stator 26 and a rotor 27. The stator may be fixed to the housing 15. The rotor 27 is mounted to the rotatable shaft 20 and has the same rotational axis A as the shaft.

In embodiments, the motor unit 10 may comprise at least one rolling bearing 30, 32, 34 provided between the shaft 20 and the housing 15. The rolling bearing(s) enables a turning movement of the shaft 20 inside the housing with minimized friction. The rolling bearing may be of different types, in the non-limiting example shown in Fig. 1, ball bearings 30, 32 are employed. Other possible types are cylindrical roller bearings, spherical roller bearings, tapered roller bearings, needle roller bearings, and/or any type of roller bearing being provided without the use of an inner ring. Depending on the individual construction of the motor unit 10, different types of rolling bearings may be combined in embodiments.

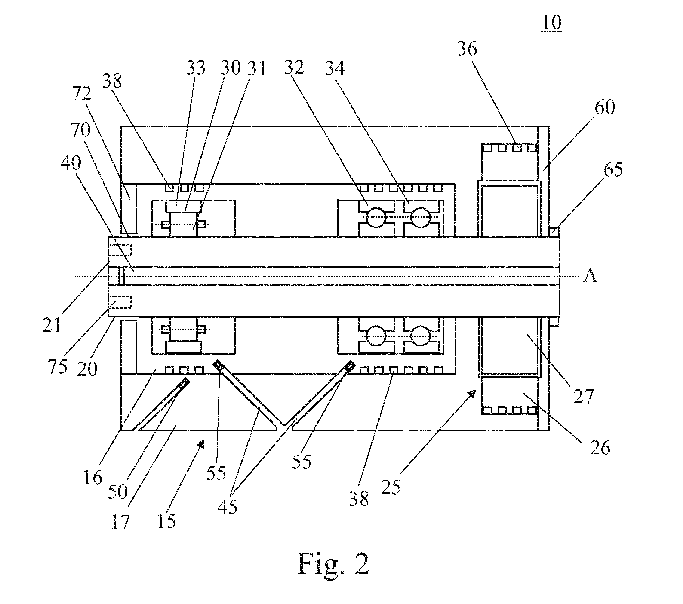

Fig. 2 shows a motor unit 10 according to embodiments. Therein, a first rolling bearing 30 is provided, as a cylindrical rolling bearing with an outer ring 33 and without an inner ring. The plurality of cylindrical rolling elements 31 are in direct contact with the shaft 20, as there is no inner ring between the rolling elements 31 and the shaft. Using a rolling bearing without an inner ring allows for an improved accuracy and control of the run-out of the shaft 20 inside the housing 15, and thus improves cutting accuracy of the wire saw.

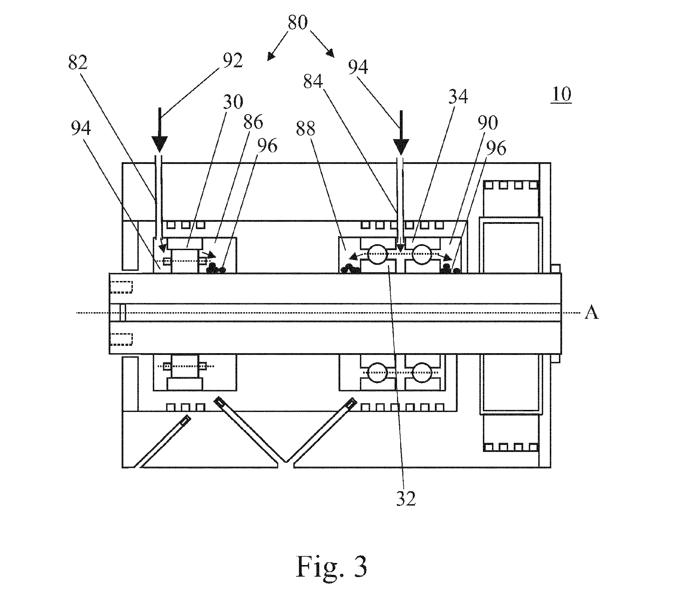

It is understood that the features described in the following with respect to Fig. 2 and Fig. 3, which in detail pertain, e.g., to embodiments including the measurement of temperature and/or vibrations, the cooling of the bearing(s), the shaft, and the motor, to the sealing of the motor unit, and to the lubrication or greasing of rolling bearing(s), may each be applied as single features in combination with embodiments as described with respect to Fig. 1, and that each of the disclosed embodiments can be combined with any other, as long as technically feasible, to achieve the technical effects attributed to the respective features or feature combinations as described below, alone or in the respective combinations.

In embodiments as shown in Fig. 2, the housing 15 includes an inner part 16 and an outer part 17. In embodiments, the inner part 16 is inserted into the outer part 17. The inner part 16 may have a length which is smaller than the length of the outer part 17 minus the maximum dimension of the motor 25 in a direction of its rotational axis A. In embodiments, a plurality of ducts 38 are arranged on the outer diameter of the inner part 16 of the housing. They serve as channels for a coolant during operation. The coolant is a fluid, and may be a liquid, but may also be a gas. The ducts may, in embodiments, be machined into the outer diameter of the inner part 16. In embodiments, the ducts may be arranged or formed differently, for example, during the casting process. At least a part of the plurality of ducts 38 may be provided adjacent to the rolling bearings 30, 32, 34, as the rolling bearings produce a significant amount of thermal energy during operation, which is removed from the motor unit 10 via the coolant flow through the ducts 38. In embodiments, the ducts 36, 38 may also protrude - at least for a part of their length - in a radial direction from an outer face of the housing 15 towards a region of the rolling bearings 30, 32, 34 and/or towards the motor 25. This may both be applied for a housing 15 which is a two-part-construction with an inner part 16 and an outer part 17 as described above, and also for a housing 15 which is a single, unitary piece, in other words seamlessly formed, such as exemplarily shown in Fig. 1. It is understood that the housing 15 may be construed in manners varying from the described variants, also with different arrangements of the ducts 36, 38, and still is to be regarded to fall under the disclosure as described herein.

In embodiments, there may be an axial channel 40 provided protruding through the shaft 20, which is cooled by a coolant flow during operation. Together with the cooling of the rolling bearings 30, 32, 34 via the ducts 38, the cooling of the shaft 20 allows to control the temperature of the mechanical moving parts of the motor unit 10, that is the shaft 20 and the rolling bearings 30, 32, 34.

In embodiments, one or more sensors 55 are provided adjacent to the rolling bearings 30, 32, 34. The sensors 55 may be temperature sensors, and may also have - combined or alternatively - the functionality of a vibration sensor. The sensors 55 are connected to a control unit (not shown) of a wire saw device 100. By monitoring the temperature, e.g., atypical rises in temperature may be regarded as signs for a potential failure of a rolling bearing 30, 32, 34 adjacent to the respective sensor 55 in the near future. Measures may then be taken by an operator, or automatically via the control unit, in order to prevent a significant failure causing costly downtime of the wire saw device or possible damage due to a forced emergency stop during a sawing operation. The sensors may be located in channels 45 leading from an outer diameter of the housing 15, in the non-limiting example of Fig. 2 from the outer diameter of outer part 17 of the housing, towards a region radially outside from the rolling bearings 30, 32, 34, wherein the channels 45 end in the inner part 16 of the housing. The cables leading from the outside (from the control unit) through the channels 45 to the sensors 55 are not shown.

An end portion 21 of the shaft 20, at the opposite side to where the rotor 27 is attached, protrudes out of the housing 15. An air gap seal 70 is provided to seal the housing 15 with respect to the outside. The air gap seal provides a friction-less sealing between a flange 72 closing the housing 15, and the shaft 20. A further air gap seal (not shown) may be provided to seal the second flange 60, provided at the end of the housing 15 at the side of the motor 25, against the shaft 20. The thickness of the gap of the air gap seal 70 in a radial direction is about 0.1 mm. A constant air flow, which may be provided by an external pump via a port for the air inlet (not shown) outside the housing 15, serves for sealing the housing 15 against influences from an outside region of the housing. There is no mechanical friction contributed to by the air gap seal 70. The shaft 20 and/or the inner side of the flange 72 may, in embodiments, be coated with a coating in the region of the air gap seal 70. A similar air gap seal 70 may also be provided at the end portion of the shaft 20 to which the rotor 27 is mounted. Two or more axial bores 75, which may be threaded, are provided in an end portion of the shaft 20 opposite the end portion connected to the motor. The axial bores 75 serve to directly mechanically connect the motor unit with a wire guide cylinder 112, 114, 116, 118 (see Fig. 4) of a wire saw device 100. This is carried out without the use of an intermediate item, which could unnecessarily add undesirable flexibility. Thus, the shaft 20 is rigidly and in a stable, torsion free manner mounted to a wire guide cylinder. As on the opposite end of the shaft 20, the rotor 27 of motor 25 is mechanically fixed directly onto the shaft; thus, there is a direct mechanical connection from the moving rotor 27 to the wire guide cylinder 112, 114, 116, 118.

As there are no flexible parts in the chain of force between the motor 25 and the wire guide cylinder 112, 114, 116, 118 carrying the sawing wire, but a solid and rigid mechanical connection along the same rotational axis A, the movement of the wire guide cylinder is coupled to the motor without any tolerance, room for torsional deformations or for disturbances influencing the uniformity of the rotational speed, such as flutter. This positively influences the overall quality and durability of the wire saw device, and also the mean time between failure, as any - even small - variations in the uniformity of the wire guide cylinder speed may have negative consequences on the quality of the processed goods and on the durability and lifetime of the wire and of the wire saw device itself. The overall quality of the cutting process is improved by the enhanced and more precise control of the movement of the wire guide cylinder and thus also the wire. At least one vibrational sensor 50 may be provided for detecting vibrations of at least one of the rolling bearings 30, 32, 34. The vibrational sensor(s) 50 is/are provided adjacent to the bearing 30, 32, 34 which shall be monitored by the vibrational sensor(s) 50. In the non-limiting example of Fig. 2, one vibrational sensor 50 is provided radially outwards from the first rolling bearing 30. The first rolling bearing 30 may, in embodiments, be a roller bearing. A roller bearing can generally bear greater loads than a ball bearing. The first rolling bearing 30 has to take up a load of about 20 kN up to about 120 kN, more particularly of about 40 kN to 80 kN, during operation of a wire saw device 100 in which the motor unit 10 is employed. This load is, in the non-limiting example of Fig. 2, significantly greater than the loads on the second rolling bearing 32 and the third rolling bearing 34, as the first rolling bearing 30 takes up the largest amount of the load exerted by a wire guide 112, 114 (see Fig. 4) which is connected to the motor unit 10. A rotary encoder 65, also called a shaft encoder, is mounted to the shaft 20, in non-limiting embodiments at an end portion of the shaft protruding out of the housing 15 at the side of the shaft 20 where the motor 25 is mounted. It converts the angular position or motion of the shaft 20 to an analog or digital code, which is fed into a control unit.

The stator 26 of motor 25, which is an electrical motor, more particularly a torque motor, is rigidly connected to housing 15, in the non-limiting example of Fig. 2 to the outer part 17 of the housing 15. Ducts 36 are formed in an outer face of the stator 26. They serve, similarly to ducts 38 for the rolling bearings 30, 32, 34, for removing thermal energy dissipated from the stator 26 during operation. The ducts 36 are in fluidal connection to the ducts 38 for the bearings, hence the rolling bearings 30, 32, 34 are cooled by the same fluid/coolant as the stator 26, but may also be connected to a different coolant circuit. The rotor 27 of the motor 25, which is rigidly mounted to the rotatable shaft 20, also produces heat, depending on the type of motor employed. This thermal energy is also heating the shaft 20. The shaft is also taking up thermal energy from the rolling bearings 30, 32, 34. In order to keep the temperature of the shaft low and to control it, there is at least one channel 40 for a coolant, for example a central bore, provided along the shaft 20, for example along its rotational axis A.

The motor is located at a first portion of the shaft 20, and the at least one rolling bearing 30, 32, 34 is located at a different portion of the shaft.

In embodiments, at least two rolling bearings 30, 32, 34 are provided along a portion of the shaft 20 different to the portion to which the rotor 27 of motor 25 is mounted. At least one first rolling bearing 30, 32, 34 may be provided on the shaft 20 distant from the motor 25, adjacent to an end portion 21 of the shaft 20. At least one second rolling bearing 32 is located at a portion of the shaft 20 adjacent to the location of the motor 25. The length of the motor 25 in a direction of the rotational axis A may be less than 30 %, more particularly less than 20 % of the overall length of the housing 15. In embodiments, the housing comprises ducts 36, 38 for a coolant for the motor 25, and/or for the rolling bearings 30, 32, 34, and/or for the shaft 20. The housing may, for example, have threaded bores (not shown) on its outer face, with which the motor unit 10 is mounted, for example, to a machine frame (not shown) of a wire saw device 100. It may also be mounted to the machine frame with other known techniques.

The housing 15 of the motor unit 10 is sealed in embodiments, so as to allow for maintenance free operation for a longer period of time. Exceptions are ports (not shown) for the coolant, where the ducts 36, 38 for the fluid/coolant and the connection of the at least one channel 40 in the shaft 20 are connected to one or more external coolant circuits. In embodiments, the motor unit 10 is provided with a permanent lubrication for the at least one rolling bearing 30, 32, 34.

The motor is able to provide a torque of about 20 to about 700 Nm, more particularly from about 70 Nm to about 500 Nm.

Fig. 3 shows a motor unit 10 similar to that of the exemplary embodiment of Fig. 2, wherein most reference numbers for identical parts as in Fig. 2 have been omitted for illustrational purposes. The motor unit 10 of embodiments shown in Fig. 3 includes a greasing system 80. The greasing 80 system includes at least one fresh grease duct 82, 84 leading to at least one rolling bearing 30, 32, 34. The greasing system 80 further includes at least one space for used grease 86, 88, 90. In particular, first fresh grease duct 82 leads to a first fresh grease reservoir 94, adjacent to the first rolling bearing 30. When fresh grease 92 is inserted into the first fresh grease duct 82, it presses the grease already present in the first fresh grease reservoir 94 into the first rolling bearing 30. Old grease 96 from the first rolling bearing 30 is pressed out of the bearing and into the first space for used grease 86, where it accumulates over time with each insertion of fresh grease 92. The greasing system 80 of embodiments is designed such that a greasing insertion is scheduled in an interval of some weeks, for example 2 weeks, to some months, for example 3 months. A typical interval between grease insertions may be 1 or 2 months. The spaces for used grease 86, 88, 90 are dimensioned such that they can take up enough used grease to allow for a continuous operation of the motor unit 10 for up to 5 years, without having to open the motor unit 10 and to remove the used grease 96. A typical dimension for the first space for used grease 86 would be from about 400 cubic centimeters to about 2000 cubic centimeters. A second fresh grease duct 84 serves for greasing the second rolling bearing 32 and the third rolling bearing 34, wherein the inserted grease 94 serves for greasing both rolling bearings 32, 34, as the second fresh grease duct 84 ends between the second rolling bearing 32 and the third rolling bearing 34. The used grease 96 accumulates in the second space for used grease 88 and the third space for used grease 90. With each insertion of grease into a fresh grease duct 82, 84, only a small amount of grease is inserted into each of the first fresh grease duct 82 and the second fresh grease duct 84, for example 2 g to 20 g, more particularly 4 g to 16 g. The insertion may be carried out manually by an operator or via a grease pump (not shown) controlled by a control unit of the wire saw device. It is understood that the fresh grease ducts and the spaces for used grease may also be arranged differently, and are still regarded to fall under the present disclosure.

The greasing system 80 allows for a supply of the rolling bearing(s) 30, 32, 34 with fresh grease in intervals over a long period of time. So, the motor unit can run in continuous (or 24/7) operation for long periods without scheduled maintenance or downtime. Continuous operation without maintenance of up to about 40,000 hours can be achieved, which is about 5 years of continuous operation. This is achieved without occasional dismantling of the unit for maintenance or having to replace one or more of the rolling bearings.

Fig. 4 shows a schematic front view of an exemplary, non-limiting wire saw device 100 according to embodiments. Wire saw device 100 has a wire guide device 210 including four wire guide cylinders 112, 114, 116, 118. A wire management unit 130 provides a wire to the wire guide cylinders 112, 114, 116, 118. The wire management unit 130 includes a supply coil 134 on which a wire reservoir, which may provide several hundred kilometers of wire, is provided. Fresh wire 230 is fed to wire guide device 210 from supply coil 134. Furthermore, wire management unit 130 includes a take-up spool 138 on which the used wire 240 is recoiled. Wire management unit 130 may include further devices such as low inertia pulleys (not shown) and tension arms (not shown) for wire tension regulation. In some embodiments, digital coders are provided on the tension arms.

Each wire guide cylinder 112, 114, 116, 118 may be connected to a motor unit 10 such as disclosed herein (motor units shown in broken lines in Fig. 4). In embodiments as shown in Fig. 4, two wire guide cylinders 112, 114 are directly driven by motor units 10.

During operation, e.g., during the sawing process, the motor units 10 drive the wire guide cylinders 112, 114 so that the wire guide cylinders rotate about their longitudinal axis. Thus, the wire in wire web 200 is transported into a wire transport direction 215, 225.

The material to be sawed, e.g. a block 306 of a semiconductor material (also called silicon ingot), is attached to a holder. For example, block 306 may be mounted to a support mechanism which is not shown in Fig. 4. In order to saw the block 306, it is lowered toward wire web 200. The wire is transported in wire transport direction 215, 225 at a considerable speed, e.g. from 10 m/s to 30 m/s, in particular between 15 m/s and 25 m/s. When block 306 is pressed against the wire web 200 in a working area 220 of wire web 200, the moving wire abrades the semiconductor material and, thus, saws block 306 into thin slices. Such slices may, for example, be used as wafers in the semiconductor industry. The total length of wire in the wire web being in contact with the material to be sawed at a time may be referred to as the effective wire cutting length. Furthermore, the speed with which the material to be sawed is lowered into the wire web may be referred to as the material feed rate.

Fig. 5 shows a schematic top view of an exemplary, non-limiting wire saw device 100, according to embodiments, with two wire guide cylinders 112, 114. The object to be sawed, such as block 306 as shown in Fig. 4, is not shown. The wire is spirally wound about the wire guide cylinders 112, 114 and forms a wire web 200 (also called layer) of parallel wires between the two wire guide cylinders. Wire guide cylinders 112, 114 are covered with a layer of synthetic resin and are scored with grooves having very precise geometry and size. The distance between the grooves, or the pitch of the grooves, determines the spacing D1 between two adjacent strings or lines of wire. This distance D1 also determines the maximum thickness of the slices cut by the wire saw device. The wafer thickness can be between 60 µm and 220 µm, while distance D1 is from 180 to 400 µm, particularly from 300 µm to 360 µm. The motor units 10, according to embodiments, are directly connected to the wire guide cylinders 112, 114 at the end portions 21 of their respective shafts 20. The wire saw 100 in Fig. 5 might also be equipped with only one motor unit 10 at one wire guide cylinder 112, 114.

The wire saw devices 100 in Fig. 4 and Fig. 5 are only to be seen as non-limiting examples of wire saw devices 100 according to embodiments. Other examples may have one to four wire guide cylinders 112, 114, 116, 118, and may have one to four motor units 10. In embodiments, also higher or lower numbers of wire guide cylinders may be applicable.

While the foregoing is directed to embodiments of the invention, other and further embodiments of the invention may be devised without departing from the basic scope thereof, and the scope thereof is determined by the claims that follow.

## Claims

1. Motor unit (10) for a wire saw device, comprising:
- a housing (15),
- a shaft (20) being rotatably provided in the housing (15),
- a motor (25) having a stator (26) and a rotor (27), the stator being
fixed to the housing (15),
wherein the rotor (27) is mounted to the shaft (20) and has the same rotational axis (A) as the shaft, and wherein the shaft and the motor (25) are located in the housing (15).

2. The motor unit of claim 1, further comprising at least one rolling bearing (30, 32, 34) provided between the shaft (20) and the housing (15).

3. The motor unit of claim 2, wherein the housing (15) comprises ducts (38) for cooling the at least one rolling bearing (30, 32, 34) with a coolant.

4. The motor unit of any preceding claim, wherein the shaft (20) comprises at least one channel (40) for cooling the shaft internally with a coolant.

5. The motor unit of any preceding claim, comprising at least one rolling bearing (30, 32, 34) having an outer ring (33) and a plurality of rolling elements (31), wherein the rolling elements are in direct mechanical contact with the shaft (20).

6. The motor unit of any preceding claim, wherein at least one end portion (21) of the rotatable shaft (20) protrudes out of the housing (15), and wherein the shaft is sealed against the housing with an air gap seal (70).

7. The motor unit of claims 1 or 2, wherein the motor (25) is located at a first portion of the shaft (20), and wherein the at least one rolling bearing (30, 32, 34) is located at a different portion of the shaft (20).

8. The motor unit of any preceding claim, wherein at least two rolling bearings (30, 32, 34) are provided along a portion of the shaft (20) different to the first portion to which the rotor (27) is mounted.

9. The motor unit of any preceding claim, wherein the housing (15) comprises an inner part (16) and an outer part (17), and wherein the inner part protrudes along at least a part of the length of the outer part (17), and wherein ducts (38) for a coolant are provided on an outer face of the inner part (16) of the housing (15).

10. The motor unit of any preceding claim, further comprising at least one vibrational sensor (50) provided adjacent to at least one rolling bearing (30, 32, 34), and preferably at least one temperature sensor (55) provided adjacent to at least one rolling bearing (30, 32, 34).

11. The motor unit of any preceding claim, further comprising a greasing system for at least one roller bearing (30, 32, 34), which includes at least one fresh grease duct (82, 84) and at least one space for used grease (86, 88, 90).

12. The motor unit of claim 1, further comprising:
- at least one rolling bearing (30) provided between the shaft (20) and the housing (15), having an outer ring (33) and a plurality of rolling elements (31), and wherein the rolling elements are preferably in direct mechanical contact with the shaft (20),
- at least one duct (38) for cooling the at least one rolling bearing (30, 32, 34) with a coolant, the duct provided in the housing (15),
- at least one channel (40) for cooling the shaft (20) internally with a coolant,
- a greasing system (80) for the at least one roller bearing (30, 32, 34), which includes at least one fresh grease duct (82, 84) and at least one space for used grease (86, 88, 90).

13. The motor unit of any preceding claim, wherein the motor (25) is a torque motor, being adapted to deliver a torque of at least 20 Nm.

14. A wire saw device (100), comprising a motor unit (10) of any of claims 1 to 13.

15. Use of a motor unit (10) according to any of claims 1 to 13 in a wire saw device (100).
